Europäisches Patentamt

European Patent Office

Office européen des brevets

(19)

(11) Numéro de publication : **0 323 380 B1**

(12)

# FASCICULE DE BREVET EUROPEEN

(45) Date de publication du fascicule du brevet :
24.07.91 Bulletin 91/30

(51) Int. Cl.⁵ : **A01K 73/04, A01K 73/06**

(21) Numéro de dépôt : **88460034.7**

(22) Date de dépôt : **23.12.88**

(54) **Procédé d'arrimage de panneaux de pêche et dispositif destiné à équiper les panneaux pour la mise en oeuvre du dit procédé.**

(30) Priorité : **24.12.87 FR 8718464**

(43) Date de publication de la demande :
**05.07.89 Bulletin 89/27**

(45) Mention de la délivrance du brevet :
**24.07.91 Bulletin 91/30**

(84) Etats contractants désignés :
**BE DE ES FR GB GR IT NL SE**

(56) Documents cités :
**GB-A- 210 396
GB-A- 365 948
US-A- 2 619 754**

(73) Titulaire : **Goalabre, Yves
Quai Est
F-29110 Concarneau (FR)**

(72) Inventeur : **Goalabre, Yves
Quai Est
F-29110 Concarneau (FR)**

(74) Mandataire : **Schmit, Christian Norbert Marie
et al
Cabinet Ballot-Schmit Immeuble Le Suffren 23
rue des Peupliers
56100 Lorient (FR)**

**Description**

L'invention concerne un procédé d'arrimage de panneaux de pêche et un dispositif destiné à équiper les panneaux pour la mise en oeuvre du dit procédé.

Un état de la technique de ce genre est publié dans GB-A-365 948, qui comporte toutes les caractéristiques des préambules des deux revendications indépendantes 1 et 5.

Le panneau de pêche a une double fonction. D'une part, il assure, de par son poids, une bonne stabilité du chalut sur le fond marin ; d'autre part, il assure une divergence des funes de façon à ouvrir latéralement le chalut. Un panneau est un pièce dont les formes évoluent autour d'un parrallélépipède rectangle, soit faite de planches de bois armaturées de fer et munie de lourdes semelles d'acier, soit de pièces d'acier soudées, ce qui lui permet d'assurer une première fonction qui est la stabilité du chalut ; un seconde fonction est réalisée grâce à la pression qu'exerce l'eau sur chacun des panneaux correctement positionnés, pression qui tend à les écarter, assurant ainsi l'ouverture du chalut. Le point où s'exerce la traction de la fune sur le panneau est généralement situé au tiers avant de la longueur de ce panneau. Le réglage de l'angle que fait le panneau avec la fune s'obtient en ajustant le point d'ancrage du bras situé sur la face opposée du panneau. Il faut rappeler que le bras est, de manière générale, un câble qui relie les pattes du chalut au panneau. Plus ces deux points sont rapprochés, plus le panneau tend à se positionner dans un plan normal à la fune. Pour une bonne utilisation du panneau, il faut donc ajuster ce point d'ancrage en fonction du type du chalut tracté par le navire.

Dans cette technique de pêche, on se trouve en face d'une double difficulté : manoeuvrer des panneaux lourds et encombrants (pour la bonne stabilité) tout en assurant leur positionnement correct qui conditionne l'ouverture optimale du chalut.

Un des gros problèmes se pose au niveau de la liaison de la fune au panneau d'une part, et de la liaison du panneau au bras d'autre part. Jusqu'à maintenant, ces liaisons sont essentiellement assurées par des manilles fixées :

– pour la liaison "fune/panneau", soit sur un élément rigide solidaire du panneau, soit sur un braguet articulé sur le panneau ;

– pour la liaison panneau/bras : sur un épaulement percé de différents trous permettant le réglage du point d'ancrage, donc de l'angle défini précédemment que doit faire le panneau avec la fune.

Dans ces conditions, le train de pêche se compose d'une chaîne d'éléments successifs reliés entre eux par des manilles, à savoir :

– un treuil (sur le navire),

– la fune,

– une manille de liaison fune/panneau,

– un panneau,

– une pièce de liaison patte de panneau/bras,

– un bras,

– le chalut.

Lors des manoeuvres de virage (opération consistant à ramener le chalut sur le navire pour le vider et au besoin le réparer), les treuils montés sur le navire bobinent les funes et amènent les panneaux au droit de deux chapes fixées sur un portique à l'arrière du chalutier. Pour permettre de remonter les bras, il est alors nécessaire de procéder à la désolidarisation des panneaux de l'ensemble du train de pêche. Pour se faire, le panneau suspendu à la chape par la fune est saisi par une chaîne solidaire du portique. Une fois cette chaîne arrimée au portique, la fune est détendue et le panneau pend à cette chaîne ainsi que la partie du train de pêche en aval du panneau. La fune n'ayant plus de fonction de liaison peut alors être démaillée du panneau et raccordée au bras par l'intermédiaire d'un câble court appelé "faux bras". Cette opération effectuée, le treuil peut à nouveau bobiner les bras et poursuivre l'opération de halage qui amènera le chalut le long du bord. Ces opérations de saisie du panneau, de maillage et démaillage sont effectuées par l'équipage. Ce travail, même par beau temps, présente un danger évident car le panneau (d'une masse de 800 à 900 kg pour un navire de 30 à 35 mètres, plusieurs tonnes sur les grosses unités) balaie, du fait du tangage et du roulis, une surface considérable sur le navire. Chaque année, de nombreux accidents, parfois mortels, sont à déplorer.

La présente invention a pour but de pallier ces inconvénients et concerne un procédé d'arrimage de panneaux de pêche supprimant toutes ces manipulations de manilles. Il met en oeuvre une liaison directe entre la fune et le bras de telle sorte que le panneau ne soit plus considéré comme un élément de la chaîne du train de pêche mais comme une pièce enfilée sur ce train de pêche avec des moyens capables d'assurer sa solidarisation automatique au train de pêche durant l'opération de filage, tout en permettant son arrimage et son désarrimage automatique.

L'invention concerne plus particulièrement un procédé d'arrimage d'un panneau de pêche du type comportant un orifice à travers lequel peut coulisser librement le train de pêche et être solidarisé à ce dernier lorsque le train de pêche est sous tension, caractérisé en ce qu'il consiste à assurer simultanément et sans opération manuelle l'accrochage du panneau au portique du navire et la désolidarisation du train de pêche du dit panneau pour le virage du chalut, et réciproquement le décrochage du panneau de son portique et la solidarisation du panneau au train de pêche pour le filage du chalut.

L'invention sera mieux comprise à l'aide des explications qui vont suivre et des figures jointes parmi lesquelles :

- la figure 1 illustre schématiquement le procédé d'arrimage conforme à l'invention ;
- les figures 2, 3 et 4 sont des schémas illustrant les étapes du procédé conforme à l'invention durant les opérations de virage du chalut ;
- la figure 5 est un schéma illustrant le procédé selon l'invention et les moyens de sa mise en oeuvre, dans une configuration correspondant à l'arrimage proprement dit du panneau sur le portique du navire ;
- les figures 6, 7 et 8 sont des vues illustrant un mode de réalisation de l'un des éléments permettant la mise en oeuvre du procédé selon l'invention ;
- les figures 9 et 10 illustrent deux variantes de réalisation d'un second élément solidaire du portique du navire destiné à coopérer avec le précédent.

Pour plus de clarté, les mêmes éléments portent les mêmes références sur toutes les figures.

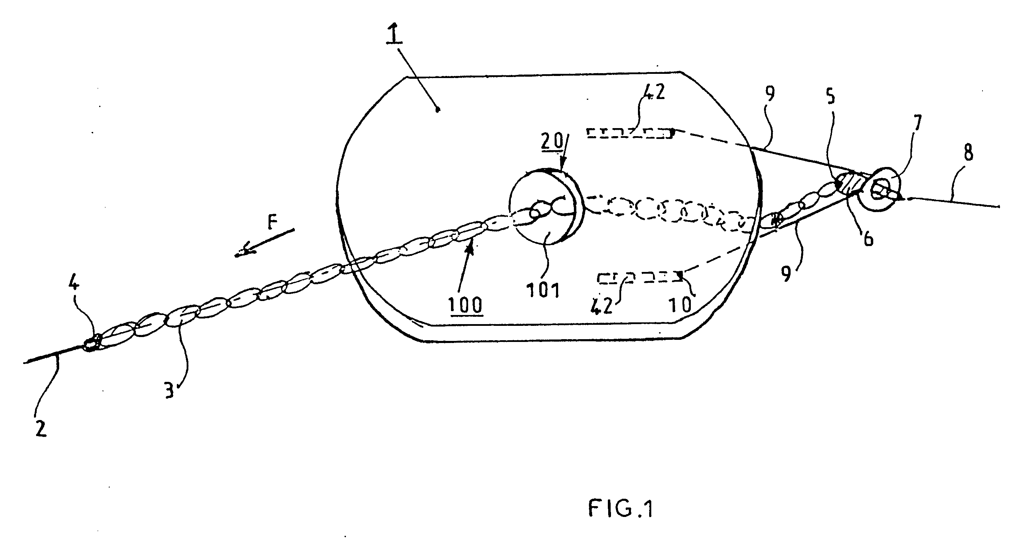

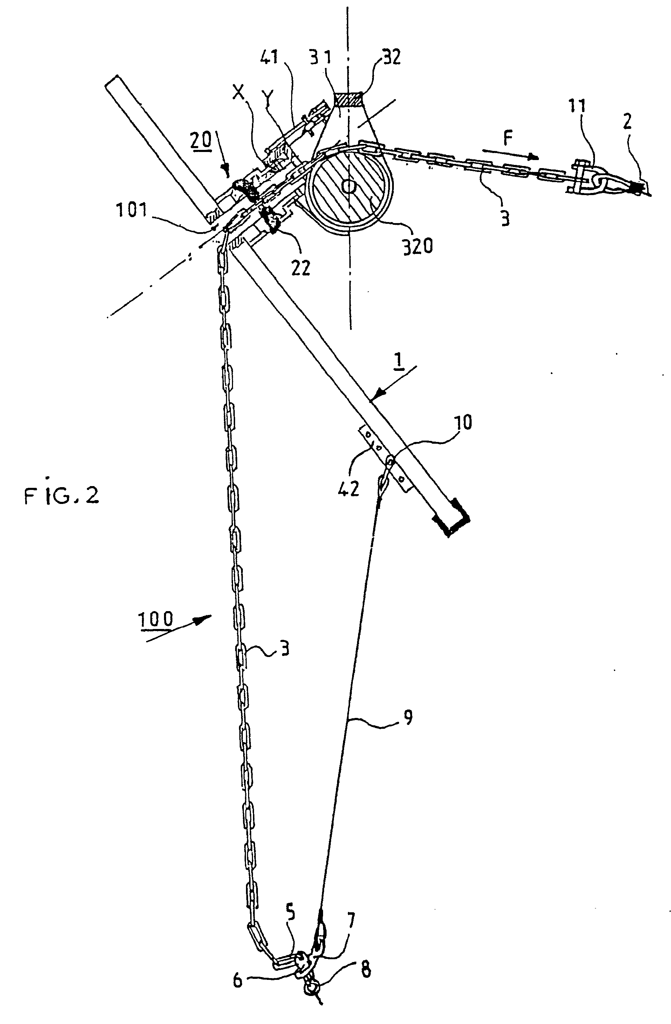

Comme le montre la figure 1, complétée par les figures 2, 3 et 4, le procédé d'arrimage de panneaux de pêche conforme à l'invention consiste à faire passer le train de pêche (100) à travers un orifice (101) pratiqué dans le panneau (1) de telle sorte que ce train de pêche puisse être solidarisé ou désolidarisé automatiquement du panneau. Le terme "arrimage" est pris ici dans un sens large se rapportant aussi bien à son arrimage au portique qu'à son fonctionnement pendant les opérations de pêche, de filage ou de virage.

Le train de pêche (100) est constitué de la fune (2), d'une chaîne dite de traction (3) solidaire à l'une de ses extrémités (4) de cette fune (2) et à l'autre extrémité (5) d'une poire (6) destinée à venir en butée sur l'anneau (7) lui-même solidaire du bras (8) du chalut (non représenté). Le train de pêche (100) se présente, conformément à l'invention, sans solution de continuité depuis la fune (2) jusqu'au bras (8) et est agencée pour pouvoir coulisser librement à travers l'orifice (101) prévu à cet effet dans le panneau (1).

Le procédé conforme à l'invention consiste donc à créer une liaison directe entre la fune (2) et le bras (8) afin de permettre de virer ou de filer le chalut sans devoir recourir à une rupture du train de pêche (100). En effet, selon une caractéristique importante de l'invention, un organe de solidarisation (20) solidaire du panneau (1) comporte des moyens d'agrippage (22) capables d'une part de rendre automatiquement le train de pêche (100) solidaire du panneau (1) sous l'action d'une force de traction (F) appliquée sur ce train de pêche (100) au niveau de la fune (2). Cet organe (20) est centré par rapport à l'orifice (101) de passage de la chaîne (3) à travers le panneau (1).

Sur la figure 1, le panneau (1) et le train de pêche (2, 3, 8) portant la référence générale (100) sont représentés dans une configuration correspondante à une phase de virage. Un effort de traction (F) est appliqué sur la fune (2), effort transmis à la partie de la chaîne (3) située entre l'extrémité (4) et l'élément (20) et qui se trouve donc en position tendue. L'autre partie de la chaîne (3) en revanche se trouve hors tension et est donc détendue. La poire (6) est en butée sur l'anneau (7) du bras (8). Les pattes du panneau (9) et le bras (8) sont tendus.

Les étapes relatives au virage du train de pêche (100), conformément à l'invention, sont plus clairement illustrées au moyen des figures 2, 3 et 4. Sur ces figures, on retrouve le panneau de pêche (100). Il est relié d'un côté au bras de chalut (8), au moyen de deux pattes (9) de panneau, solidaires de l'un des points d'ancrage (10) choisi sur l'épaulement (42) prévu à cet effet.

Conformément à l'invention, la fune (2) est reliée par tout moyen connu el qu'une manille (11) à une chaîne (3) dont l'autre extrémité (5) est solidaire de la poire (6) venant en butée sur l'anneau (7) du bras (8). L'ensemble "fune (2)/chaîne (3)/bras (8)" forme le train de pêche (100) et traverse le panneau par l'orifice (101) fait dans le panneau (1).

Un élément (20) comporte un système d'agrippage (des doigts (22) par exemple) qui, sous l'effet de l'effort de traction (flèche F) appliquée sur la fune (2) (figure 2) agrippe la chaîne (3), ce qui rend solidaire le panneau (1) du train de pêche (100). Cet élément est solidaire du dit panneau (1) sur la face opposée à celle qui reçoit le point d'ancrage (10).

La configuration représentée sur ces figures 2, 3 et 4 correspond à la phase du virage du chalut conduisant à l'arrimage du panneau sur la chape (31) solidaire du portique (32).

Le virage est l'opération qui consiste à ramener le chalut sur le navire. Durant cette opération, les treuils montés sur les navires bobinent la fune (2) et amènent le panneau (1) au droit du portique (32) de potence situé à l'arrière du navire, portique (32) qui comporte une chape (31) portant un réa (320) sur lequel s'enroule la chaîne (3) qui fait, conformément à l'invention, partie intégrante du train de pêche (100).

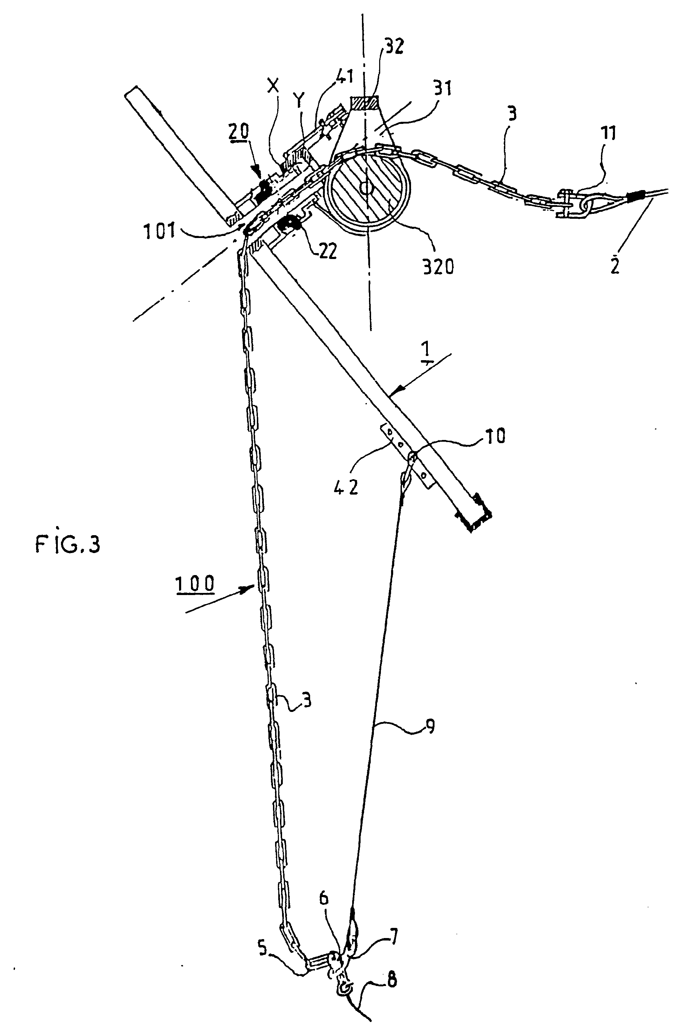

Selon une autre caractéristique de l'invention, l'organe (20) comporte un élément mâle (X) destiné à pénétrer dans un élément femelle (Y) solidaire de la chape (31). Ces deux éléments mâle (X) et femelle (Y) disposent de deux mécanismes complémentaires dont l'interaction permet à la fois la désolidarisation du train de pêche (100) par escamotage du système de doigts (22) dès que l'effort de traction sur la fune (2) est relâchée, et l'immobilisation de l'élément (X) dans l'élément (Y) (figure 3). La chaîne (3) peut alors coulisser librement dans l'orifice (101) tandis que le panneau (1) se trouve automatiquement arrimé (solidarisé) à la chape (31), donc au portique (32) du navire.

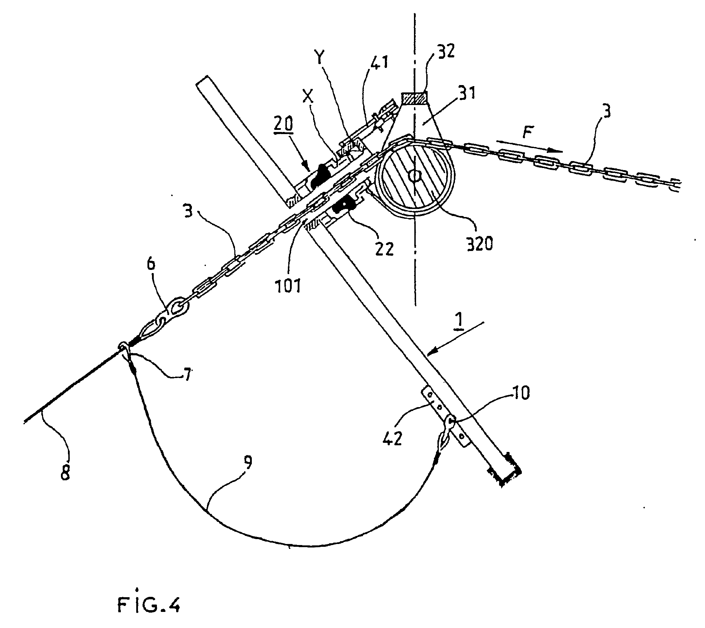

Ensuite, comme le montre la figure 4, le halage du chalut est obtenu en bobinant autour du réa (320), la chaîne (3) du train de pêche (100) qui coulisse librement dans l'orifice (101) du panneau (1).

L'interaction des deux mécanismes de l'élément mâle (X) de l'organe (20) et de l'élément femelle (Y) solidaire de la chape (31) est obtenue au moyen d'un vérin (41) solidaire lui aussi de la chape (31), comme cela sera expliqué au moyen des figures suivantes.

Pour l'opération inverse, c'est-à-dire le filage, il suffit de répéter les mêmes opérations mais en sens inverse.

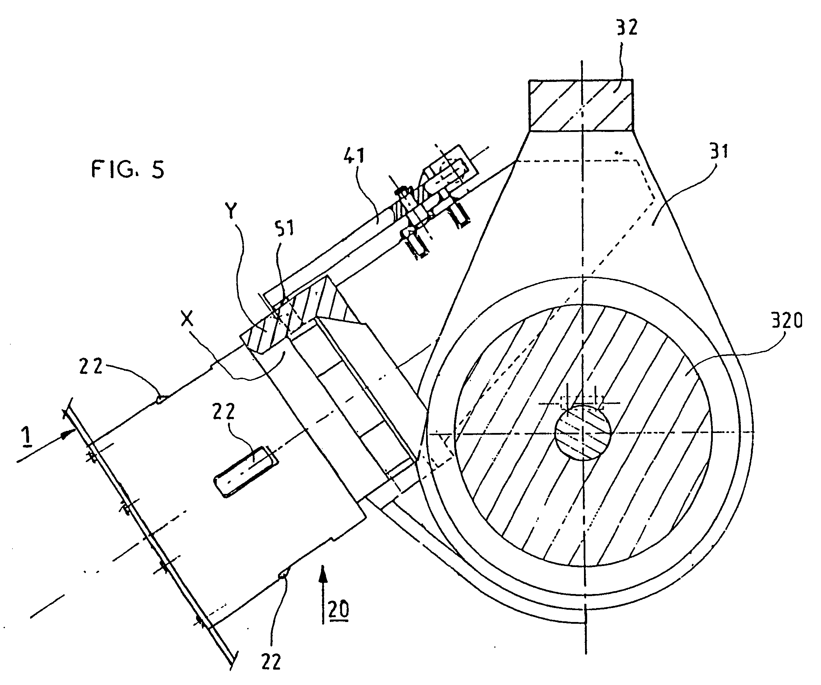

La figure 5 est une illustration schématique d'un ensemble comportant l'organe de solidarisation (20) de la chaîne (3) dont l'élément mâle (X) est enclenchée dans l'élément femelle (Y). La solidarisation des deux éléments mâle et femelle est obtenue, grâce à l'action de mâchoires (51) manoeuvrés par le vérin (41). L'organe (20) est lié solidairement au panneau (1) par tout moyen connu tel que soudure ou boulonnage, soit directement sur la toile du panneau, soit sur un braguet (bras articulé) lui-même solidaire du panneau.

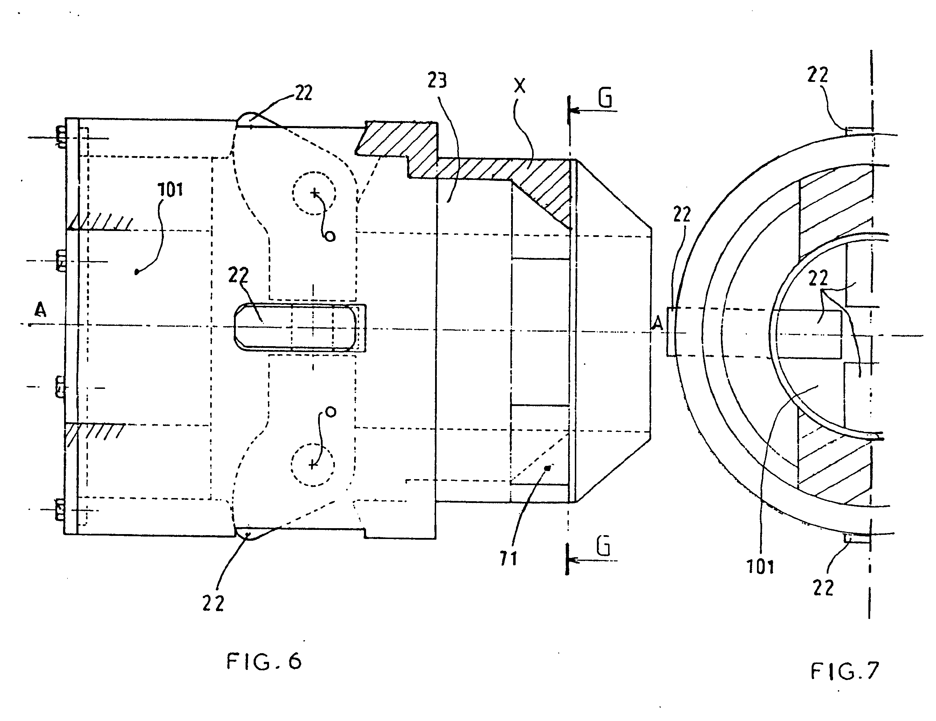

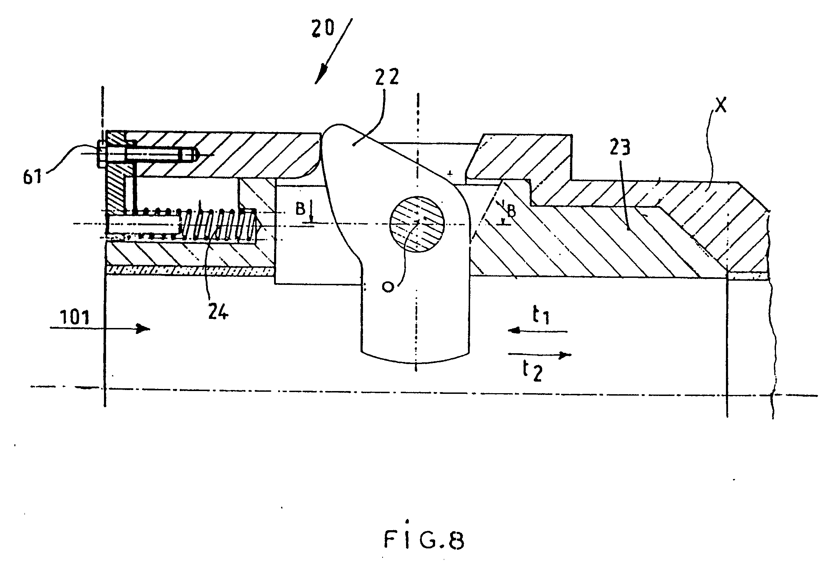

Un exemple de réalisation de l'organe de solidarisation (20) du train de pêche (100) au panneau de chalut (1) est plus clairement illustré au moyen des figures 6, 7 et 8 représentant respectivement une vue en élévation, une demi-coupe selon (GG) et selon (AA) de cette vue. Quatre doigts d'agrippage (22) sont montés de telle sorte qu'ils puissent occuper deux positions, l'une dite fermée (telle que représentée), l'autre dite escamotée. Ces doigts se présentent sous la forme d'une came dont la rotation se fait autour d'un point de rotation (O). Lors de l'opération de virage du train de pêche, l'effort de traction du treuil est transmis à la chaîne (3) par la fune (2). Les doigts (22) sont maintenus en position "fermée" et agrippent la chaîne (3) sous l'action d'une butée (23) et d'un ressort (24) (figure 8). Le panneau (1) et donc l'organe (20) qui lui est solidaire sont halés vers la chape (31) jusqu'à ce que la partie mâle (X) de cet organe (20) s'engage dans l'élément (Y). La traction exercée par la fune (2) maintient le contact entre les deux éléments (X) et (Y). Le vérin (41) est alors actionné. Il manoeuvre des mâchoires (51) qui viennent se loger dans des lumières (71) pratiquées dans l'organe (20) jusqu'à venir en appui sur la butée (23) sans toutefois pouvoir la repousser car elle est bridée par les quatre doigts (22) qui sont alors en position fermée sous l'action de la chaîne (3) alors sous tension. Lorsque l'effort de traction (F) exercé sur le treuil est libéré, le panneau (1), le bras (8) et le chalut pendent retenus à la chape (31) par la liaison que constitue la coopération entre les mâchoires (51) et les lumières (71) dont les profils sont complémentaires.

Si l'on supprime la tension sur la chaîne, la pièce (23) peut coulisser et, sous la pression exercée par le vérin (41) et transmise par les mâchoires (51), cette pièce (23) subit alors une translation (flèche $t_1$). Celle-ci a pour effet d'effacer les quatre doigts (22) qui se mettent en position escamotée en comprimant les ressorts (24).

Le passage central (101) est totalement libéré. Le bras (9) du chalut, retenu sur le panneau par l'intermédiaire de l'ensemble poire (6)/anneau (7) fixé aux pattes (9) du chalut peut être viré au travers de l'organe (20) qui est devenu point de passage et non plus point de solidarisation de la chaîne (3) au panneau (1).

Réciproquement, lorsque le chalut est remis à l'eau, on laisse filer ce dernier. La poire (6) fixée entre la chaîne (3) et le bras (8) du chalut vient en butée dans l'anneau (7) fixé aux pattes (9) du panneau (1). L'ensemble chalut/bras (8)/panneau (1) est suspendu à la potence (32) par l'intermédiaire de la combinaison des mâchoires (51) et des lumières (71). Le vérin (41) est actionné de telle sorte que la course de la mâchoire (51) soit suffisante pour libérer la pression sur la pièce (23) qui subit alors une translation du fait de la pression exercée par les ressorts (24) (voir figure 8), les quatre doigts (22) se remettant en position "fermée", le sens de cette translation ($t_2$) est inverse de celui de ($t_1$).

On met alors la fune (2) sous tension et la chaîne (3) qui est alors bloquée par les quatre doigts (22) reprend les efforts de maintien en position de l'ensemble panneau (1)/bras (8) et chalut.

Une action sur le vérin (41) permet alors de dégager totalement les mâchoires (51), libérant la partie mâle (X) de la partie femelle (Y), de sorte que l'ensemble du train de pêche (100) peut alors être filé.

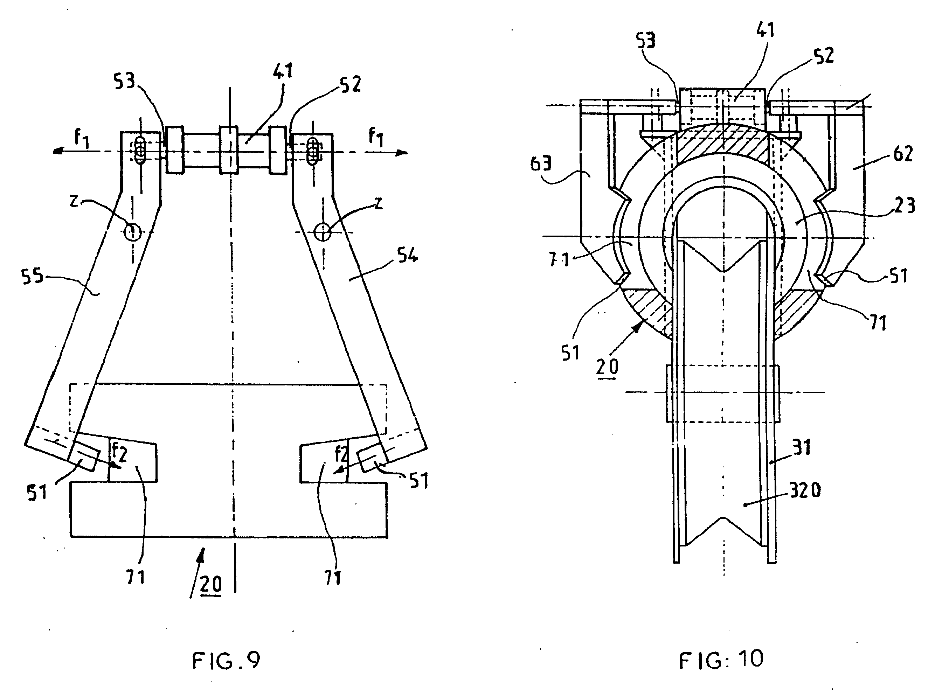

Les mâchoires (51) et leur commande peuvent revêtir différentes formes. La figure 9 illustre (en position mâchoires ouvertes) une première variante de réalisation. Le vérin (41) commande deux tiges (52, 53) reliées à deux biellettes (54, 55) articulées (en z) se terminant par les mâchoires (51). La forme de ces biellettes (54, 55) et leurs points d'articulation sont tels que lorsque les tiges (52, 53) du vérin (41) s'allongent (flèche $f_1$), les deux mâchoires (51) viennent s'encastrer (flèche $f_2$) dans les lumières (71) correspondantes et prévues à cet effet dans l'organe de solidarisation (20) défini précédemment.

La figure 10 illustre une variante de réalisation des mâchoires (51) commandées par un vérin (41) solidaire de la chape (31). Ces mâchoires (51) font partie intégrante de deux bras (62, 63) liés aux deux tiges (52, 53) du vérin (41) de telle sorte qu'elles viennent en appui à travers le lumières (71) sur la butée (23).

Le procédé conforme à l'invention conduit à une technique de chalutage qui évite des manipulations extrêmement dangereuses et difficiles à réaliser manuellement. Les moyens de mise en oeuvre d'un tel procédé peuvent s'adapter à tous types de panneaux de chalut : ils impliquent que ces derniers soient dotés d'un orifice central et qu'une chaîne soit introduite dans le train de pêche entre la fune et le bras, le panneau ne faisant plus partie de ce train de pêche mais étant un élément enfilé sur ce dernier, avec deux possibilités : être rendu solidaire automatiquement (sans avoir recours à la mise en place de manilles à manipuler en cours de pêche) du train de pêche ou bien être désolidarisé de ce dernier pour être arrimé automatiquement au portique du navire.

Il s'agit là d'une nouvelle technique qui trouve son application dans tous les types de pêche au chalut.

## Revendications

1. Procédé d'arrimage d'un panneau (1) de pêche du type comportant un orifice (101) à travers lequel peut coulisser librement le train de pêche (100) et être solidarisé à ce dernier lorsque le train de pêche (100) est sous tension (F), caractérisé en ce qu'il consiste à assurer simultanément et sans opération manuelle d'accrochage du panneau (1) au portique (32) du navire et la désolidarisation du train de pêche (100) du dit panneau (1) pour le virage du chalut, et réciproquement le décrochage du panneau (1) de son portique (32) et la solidarisation du panneau (1) au train de pêche (100) pour le filage du chalut.

2. Procédé selon la revendication 1, caractérisé en ce qu'il consiste à doter le panneau (1) d'un moyen de solidarisation (20) comportant un élément mâle (X) destiné à pénétrer dans un élément femelle (Y) solidaire du portique (32) du navire.

3. Procédé selon la revendication 2, caractérisé en ce qu'il consiste à faire coopérer des mâchoires (51) solidaires de l'élément femelle (Y) avec des lumières (71) prévues dans l'élément mâle (X) de telle sorte que la solidarisation de ces deux éléments se trouvant assurée automatiquement, l'accrochage du panneau (1) au portique (32) le soit aussi.

4. Procédé selon l'une des revendications précédentes, caractérisé en ce qu'il consiste à commander les moyens de solidarisation (20) du panneau au train de pêche (100) et les moyens de solidarisation (51, 71) du panneau (1) au portique (32) du navire dans le sens inverse, ce que conduit à sa désolidarisation automatique.

5. Dispositif d'arrimage de panneau (1) de pêche celui-ci comportant un organe (20) muni d'un système d'accrochage (22) pour la mise en oeuvre du procédé selon l'une des revendications précédentes, caractérisé en ce que ledit système d'accrochage (22) se présente sous la forme d'un jeu de doigts en forme d'une came à axe de rotation (O), capables d'occuper deux positions, l'une dite "fermée", l'autre dite "escamotée", la première étant automatiquement maintenue en place sous l'action d'un effort de traction (F) appliqué sur la fune (2) du chalut grâce à la coopération d'une butée (23) avec un ressort (24), cette position fermée assurant la solidarisation du train de pêche (100) au panneau (1), et ceci au niveau d'une chaîne (3) reliant la fune (2) au bras (3) du chalut.

6. Dispositif selon la revendication 5, caractérisé en ce que cet organe (20) comporte une lumière (71) à travers laquelle une mâchoire (51) solidaire d'une chape (31), elle-même solidaire du portique (32) du navire peut s'introduire et appliquer une pression sur la butée (23) lui impliquant un mouvement de translation suffisant pour placer les doigts (22) en position escamotée, ce qui a pour effet de désolidariser le train de pêche (100) du panneau (1).

7. Dispositif selon l'une des revendications 5 et 6, caractérisé en ce que, durant l'opération de virage du chalut, la fune (2) étant bobinée sur le treuil du navire, une force de traction étant appliquée sur la chaîne (3), le panneau (1) solidaire du train de pêche (100) est amené au droit de la chape (31) du portique (32) jusqu'à ce que la partie mâle (X) de l'organe (20) pénètre dans la partie femelle (Y) ; un vérin (41) commandant alors l'introduction de mâchoires (51) dans les lumières (71) de l'organe (20) rendant ainsi le panneau (1) solidaire du portique (32) et indépendant du train de pêche (100) qui peut alors être halé librement à travers l'orifice (101).

8. Dispositif selon l'une des revendications 5 et 6, caractérisé en ce que, durant l'opération de filage du chalut, le vérin (41) est commandé dans un premier temps de telle sorte que la pression appliquée par les mâchoires (51) de l'élément (Y) sur la butée (23) de l'organe (20) soit libérée, permettant au ressort (24) de ramener les doigts (22) en position fermée, assurant ainsi la solidarisation du panneau (1) avec le train de pêche (100), la course du vérin (41) se poursuivant dans un deuxième temps jusqu'à ce que les mâchoires (51) s'échappent des lumières (71) libérant ainsi le panneau (1) du portique (32) du navire et permettant le filage du chalut pour l'opération de pêche.

9. Dispositif selon l'une des revendications 5, 6, 7 et 8, caractérisé en ce que les mâchoires (51) sont situées à l'extrémité de biellettes (54) et (55) dont l'autre extrémité est commandée par les tiges (51, 52) du vérin (41).

10. Dispositif selon l'une des revendications 5 à 8, caractérisé en ce que les mâchoires (51) sont conformées dans des bras (62, 63) commandés par les tiges (51, 52) du vérin (41).

## Claims

1. Method of trimming a fishing board (1) of the type comprising an orifice (101) through which the fishing train (100) can slide freely and be fixed to the latter when the fishing train (100) is under tension (F), characterised in that it consists of ensuring, simultaneously and without manual operation, locking of the board (1) to the gantry (32) of the ship and release of the fishing train (100) from said board (1) for turning the trawl net, and reciprocally unlocking of the board (1) from its gantry (32) and fixing of the board (1) to the fishing train (100) for paying out the trawl net.

2. Method according to claim 1, characterised in that it consists of providing the board (1) with fixing means (20) comprising a male element (X) intended to penetrate a female element (Y) fixed to the gantry (32) of the ship.

3. Method according to claim 2, characterised in that it consists of causing jaws (51) fixed to the female element (Y) to cooperate with apertures (71) provided in the male element (X) in such a way that the fixing of these two elements is ensured automatically, and locking of the board (1) to the gantry (32) is also ensured.

4. Method according to any of the preceding claims, characterised in that it consists of controlling the means (2) of fixing the board to the fishing train (100) and the means (51, 71) of fixing the board (1) to the gantry (32) of the ship in the opposite direction, which leads to automatic release thereof.

5. Device for trimming a fishing board (1), the latter comprising a member (20) provided with a locking system (22) for carrying out the method according to any of the preceding claims, characterised in that said locking system (22) is in the form of a set of fingers in the form of a cam with axis of rotation (O), capable of occupying two positions, one referred to as "closed" and the other referred to as "retracted", the former being automatically held in place under the action of a traction force (F) applied to the rope (2) of the trawl net due to cooperation of a stop (23) with a spring (24), this closed position ensuring fixing of the fishing train (100) to the board (1), this being at the level of a chain (3) connecting the rope (2) to the arm (3) of the trawl net.

6. Device according to claim 5, characterised in that this member (20) comprises an aperture (71) through which a jaw (51) fixed to a strap (31) which is in turn fixed to the gantry (32) of the ship can be introduced and apply a pressure to the stop (23), imparting thereto a translational movement sufficient to place the fingers (22) in the retracted position, which has the effect of releasing the fishing train (100) from the board (1).

7. Device according to either of claims 5 and 6, characterised in that, during the operation of turning the trawl net, the rope (2) being wound on the winch of the ship, a traction force being applied to the chain (3), the board (1) fixed to the fishing train (100) is brought at right angles to the strap (31) of the gantry (32) until the male portion (X) of the member (20) penetrates the female portion (Y) ; an actuator (41) then controlling the introduction of jaws (51) into the apertures (71) of the member (20) thus making the board (1) fixed to the gantry (32) and independent of the fishing train (100) which can then be hauled freely through the orifice (101).

8. Device according to either of claims 5 and 6, characterised in that, during the operation of paying out the trawl net, the actuator (41) is driven in a first stage in such a way that the pressure applied by the jaws (51) of the element (Y) to the stop (23) of the member (20) is released, allowing the spring (24) to return the fingers (22) to the closed position, thus ensuring fixing of the board (1) to the fishing train (100), the travel of the actuator (41) continuing in a second stage until the jaws (51) leave the apertures (71) thus releasing the board (1) from the gantry (32) of the ship and allowing the trawl net to be paid out for the operation of fishing.

9. Device according to any of claims 5, 6, 7 and 8, characterised in that the jaws (51) are situated at the end of connecting rods (54) and (55) of which the other end is driven by the rods (51, 52) of the actuator (41).

10. Device according to any of claims 5 to 8, characterised in that the jaws (51) are formed in arms (62, 63) driven by the rods (51, 52) of the actuator (41).


## Patentansprüche

1. Verfahren zur Befestigung eines Fischfang-Scherbretts (1) von einer Bauart, die eine Öffnung (101) enthält, durch die der Fangzug (100) frei gleiten kann und die mit diesem letzteren fest verbindbar ist, wenn der Fangzug (100) gespannt (F) ist, dadurch gekennzeichnet, daß es darin besteht, gleichzeitig und ohne manuelle Betätigung für das Einholen des Fangnetzes das Einhaken des Scherbretts (1) am Rahmen (32) des Schiffs und das Lösen der Verbindung des Fangzuges (100) vom Scherbrett (1) und umgekehrt für das Auslegen des Fangnetzes das Aushaken des Scherbretts (1) vom Rahmen (32) und das Verbinden des Scherbretts (1) mit dem Fangzug (100) zu gewährleisten.

2. Verfahren gemäß Anspruch 1, dadurch gekennzeichnet, daß es darin besteht, das Scherbrett (1) mit einem Verbindungsmittel (20) zu versehen, das ein Steckerelement (X) enthält, das dazu bestimmt ist, in ein mit dem Rahmen (32) des Schiffs fest verbundenes Buchsenelement (Y) einzudringen.

3. Verfahren gemäß Anspruch 2, dadurch gekennzeichnet, daß es darin besteht, mit dem Buchsenelement (Y) verbundene Klemmbakken (51) zu einem Zusammenwirken mit im Steckerelement (X) vorgesehenen Langlöchern (71) zu veranlassen, derart, daß die Verbindung dieser zwei Elemente und damit ebenfalls das Einhaken des Scherbretts (1) am Rahmen (32) automatisch sichergestellt wird.

4. Verfahren gemäß einem der vorangehenden Ansprüche, dadurch gekennzeichnet, daß es darin besteht, die Mittel zum Verbinden (20) des Scherbretts am Fangzug (100) und die Mittel zum Verbinden (51, 71) des Scherbretts (1) am Rahmen (32) des Schiffs in entgegengesetzter Richtung zu steuern, was zur automatischen Lösung der Verbindung führt.

5. Vorrichtung zur Befestigung eines Fischfang-Scherbretts (1), das ein mit einem Einhaksystem (22) versehenes Element (20) aufweist, für die Ausführung des Verfahrens gemäß einem der vorangehenden Ansprüche, dadurch gekennzeichnet, daß das Einhaksystem (22) die Gestalt einer Gruppe von Zapfen aufweist, die die Form einer um eine Drehachse (O) zentrierten Nocke besitzen und zwei Positionen einnehmen können, von denen eine "geschlossen" und die andere "eingeklappt" genannt wird, wobei die erste unter der Wirkung einer Zugkraft (F), die aufgrund des Zusammenwirkens eines Anschlags (23) mit einer Feder (24) auf das Schleppseil (2) des Fangnetzes ausgeübt wird, automatisch beibehalten wird, wobei diese geschlossene Position die Verbindung des Fangzuges (100) mit dem Scherbrett (1) auf Höhe einer das Schleppseil (2) mit dem Ausleger (3) des Fangnetzes verbindenden Kette (3) gewährleistet.

6. Vorrichtung gemäß Anspruch 5, dadurch gekennzeichnet, daß dieses Element (20) ein Langloch (71) aufweist, durch das eine mit einem Bügel (31), der selbst mit dem Rahmen (32) des Schiffs fest verbunden ist, fest verbundene Klemmbacke (51) eingeführt werden kann und auf den Anschlag (23) einen Druck ausüben kann, der dem Element eine Translationsbewegung verleiht, die ausreicht, um die Zapfen (22) in die eingeklappte Position zu bringen, was zur Folge hat, daß der Fangzug (100) vom Scherbrett (1) gelöst wird.

7. Vorrichtung gemäß einem der Ansprüche 5 und 6 dadurch gekennzeichnet, daß während des Vorgangs des Einholens des Fangnetzes, bei dem das Schleppseil (2) auf die Winde des Schiffs gewickelt wird, wobei auf die Kette (3) eine Zugkraft ausgeübt wird, das mit dem Fangzug (100) fest verbundene Scherbrett (1) in gerader Richtung dem Bügel (31) des Rahmens (32) zugeführt wird, bis der Steckerteil (X) des Elements (20) in den Buchsenteil (Y) eindringt, wobei anschließend eine Hebevorrichtung (41) die Einführung der Klemmbacken (51) in die Langlöcher (71) des Elementes (20) steuert und auf diese Weise das Scherbrett (1) mit dem Rahmen (32) fest verbindet und unabhängig vom Fangzug (100) macht, der daher frei durch die Öffnung (101) verholt werden kann.

8. Vorrichtung gemäß einem der Ansprüche 5 und 6, dadurch gekennzeichnet, daß während des Vorgangs des Auslegens des Fangnetzes die Hebevorrichtung (41) in einem ersten Arbeitstakt gesteuert wird, derart, daß der durch die Klemmbacken (51) des Elementes (Y) auf den Anschlag (32) des Elements (20) ausgeübte Druck gelöst wird, was der Feder (34) ermöglicht, die Zapfen (22) in die geschlossene Position zurückzuführen, wodurch die feste Verbindung des Scherbretts (1) mit dem Fangzug (100) gewährleistet wird, wobei die Hebevorrichtung (41) in einem zweiten Arbeitstakt ihren Weg weiter verfolgt, bis die Klemmbacken (51) aus den Langlöchern (71) herausgezogen sind und auf diese Weise das Scherbrett (1) vom Rahmen (32) des Schiffs freigeben und das Auslegen des Fangnetzes für den Abfischbetrieb ermöglichen.

9. Vorrichtung gemäß einem der Ansprüche 5, 6, 7 und 8, dadurch gekennzeichnet, daß sich die Klemmbacken (51) am Ende von Schwingarmen (54 und 55) befinden, deren anderes Ende durch die Stifte (51, 52) der Hebevorrichtung (41) gesteuert wird.

10. Vorrichtung gemäß einem der Ansprüche 5 bis 8, dadurch gekennzeichnet, daß die Klemmbacken (51) an Armen (62, 63) ausgebildet sind, die durch die Stifte (52, 53) der Hebevorrichtung (41) gesteuert werden.

FIG.1

EP 0 323 380 B1

FIG. 2

FIG.3

FIG.4

FIG. 5

FIG.7

FIG.6

FIG.8

FIG.9

FIG.10

EP 0 323 380 B1